# EUROPÄISCHE PATENTANMELDUNG

(11) **EP 4 589 181 A1**
(43) Veröffentlichungstag der Anmeldung: **23.07.2025**
(21) Anmeldenummer: 24152504.7
(22) Anmeldetag: 18.01.2024
(51) Int. Cl.: F16K 7/12, F16K 7/16, F16K 27/02

(54) **DICHTSTEG FÜR MEMBRANVENTIL**

(71) Anmelder: Georg Fischer Rohrleitungssysteme AG, 8201 Schaffhausen (CH)
(72) Erfinder: Ebauer, Alexander, 8200 Schaffhausen (CH); Stoll, Eva, 79771 Klettgau (DE); Bürgi, Stefan, 8254 Basadingen (CH); Jäckle, Timo, 78247 Hilzingen (DE); Mitrovic, Dejan, 78183 Hüfingen (DE)
(74) Vertreter: Fenner, Seraina

(57) **Zusammenfassung**

Membranventil zur Regelung eines Durchflusses eines Mediums in einer Rohrleitung beinhaltend, ein Gehäuseoberteil, ein Gehäuseunterteil, eine Betätigungseinheit, eine Membrane und ein membranpressendes Innengehäuse, wobei die Membrane an einem Auflagebereich des Gehäuseunterteils aufliegt und mit einem Klemmbereich des Innengehäuses verpresst ist, wobei die Membrane an der unteren dem Medium zugewandten Seite einen Dichtsteg und das Innengehäuse eine im Klemmbereich verlaufenden Steg aufweist, wobei der Steg senkrecht über dem Dichtsteg angeordnet ist.

## Beschreibung

Die Erfindung betrifft ein Membranventil zur Regelung des Durchflusses eines Mediums in einer Rohrleitung beinhaltend, ein Gehäuseoberteil, ein Gehäuseunterteil, eine Betätigungseinheit, eine Membrane und ein membranpressendes Innengehäuse, wobei die Membrane an einem Auflagebereich des Gehäuseunterteils aufliegt und mit einem Klemmbereich des Innengehäuses verpresst ist.

Das marktübliche Design des Membranventils besteht darin, dass das Unterteil mittels Schrauben und Muttern und ggf. Unterlagscheiben mit dem Oberteil verbunden wird und die Membrane dazwischen angeordnet ist. Durch das Anziehen der einzelnen Schraubenverbindungen wird die Membrane verpresst und erreicht dadurch die für die Dichtheit erforderliche Mindestflächenpressung.

Eine Weiterentwicklung des Designs bildet jenes mit einer zentralen Gehäusemutterverschraubung, beispielsweise das Membranventil, welches in der EP 2 236 874 A1 offenbart ist.

Nachteile des bekannten Stands der Technik liegen darin, dass bei der Variante mit der zentralen Gehäusemutterverschraubung die Axialkraft über diese eine einzige Verschraubung / Schraubverbindung aufgebracht werden muss, was im Vergleich zu mehreren einzelnen Schrauben ein hohes Anzugsmoment erfordert.

Bei kleinen Dimensionen des Membranventils stellt das kein Problem dar und ist mit einem Hilfswerkzeug wie z.B. einem Bandschlüssel realisierbar, jedoch bei grossen Ausführungsformen kaum umsetzbar.

Aus der Formel F = P * A (Kraft = Druck * Fläche) geht hervor, dass die verpresste Fläche (bzw. Pressfläche auf die Membrane) ein linearer Faktor für die Axialkraft ist. Bei den marktüblichen Lösungen ist die Pressfläche gross, was bedeutet, dass eine hohe Kraft angewandt werden muss, um genügend Druck auf die Dichtung bzw. eine genügend hohe Pressung zu erhalten damit das Ventil dicht ist. Es entsteht eine erhöhte Belastung auf die einzelnen Komponenten, wodurch es zu einem vorzeitigen Versagen am Ventil führen kann.

Es ist Aufgabe der Erfindung ein Membranventil vorzuschlagen, bei welchem keine grossen Axialkräfte zum Erreichen der Dichtheit notwendig sind und dadurch die Belastung auf die einzelnen Komponenten des Ventils reduziert, wie auch die Montage des Ventils vereinfacht wird.

Diese Aufgabe wird erfindungsgemäss dadurch gelöst, dass die Membrane an der unteren dem Medium zugewandten Seite einen Dichtsteg und das Innengehäuse eine im Klemmbereich verlaufenden Steg aufweist, wobei der Steg senkrecht über dem Dichtsteg angeordnet ist.

Das erfindungsgemässe Membranventil zur Regelung des Durchflusses eines Mediums in einer Rohrleitung beinhaltet, ein Gehäuseoberteil und ein Gehäuseunterteil vorzugsweise aus Kunststoff. Das Gehäuseober- und Unterteil werden vorzugsweise über ein am Gehäuseober- und Unterteil angeordnetes Gewinde miteinander verschraubt. Das erfindungsgemässe Membranventil weist eine Betätigungseinheit auf, mittels der das Membranventil betätigt wird. Vorzugsweise enthält die Betätigungseinheit eine Spindel, eine Spindelmutter und einen Membranhalter, das mit einem Verbindungselement mit der Membrane verbunden ist und das auf die Membrane wirkt, wobei die Druckkraft über ein Druckstück übertragen wird. Des Weiteren weist die Betätigungseinheit vorzugsweise mehrere Spindelvarianten auf, wodurch die Verbindung mit einem manuellen, elektrischen oder pneumatischen Antrieb möglich ist. Das erfindungsgemässe Membranventil weist eine Membrane zur Regelung des Durchflusses auf und trennt das Membranventil in einen Medium durchströmten und Medium freien Bereich. Die Membrane wird im Gehäuse durch ein membranpressendes Innengehäuse an einen Auflagebereich des Gehäuseunterteils gepresst bzw. dazwischen geklemmt. Vorzugsweise weisen die Gehäuse im Bereich, in dem sie ineinandergreifen eine kreisförmige Grundfläche auf und sind zylindrisch ausgebildet. Die Auflagefläche ist vorzugweise als im Gehäuseunterteil angeordnete Ringfläche ausgebildet. Wobei die Membrane mit einem Klemmbereich des Innengehäuses gegen die Auflagefläche am Gehäuseunterteil verpresst ist. Das Innengehäuse ist vorzugsweise zylindrisch mit einer kreisförmigen Grundfläche ausgebildet, wodurch die Klemmfläche ringförmig ausgebildet ist. Die Membrane weist an der unteren dem Medium zugewandten Seite einen Dichtsteg auf und das Innengehäuse einen im Klemmbereich verlaufenden Steg, wobei der Steg senkrecht über dem Dichtsteg angeordnet ist. Der vorzugsweise kreisförmig umlaufende Dichtsteg ist integral an der Membrane angeordnet. Der Dichtsteg bildet vorzugsweise eine aus der Unterseite der Membrane herausragende bzw. herausstehende, die Unterseite überragende Dichtlippe. Vorzugsweise kann der Dichtsteg eine Querschnittsfläche aufweisen, die in einem Spitz zuläuft oder auch eine abgerundete Form aufweist. Der am Klemmbereich des Innengehäuses angeordnete Steg verläuft vorzugsweise kreisförmig umlaufend. Der Steg ist erhaben gegenüber der Fläche des Klemmbereichs, bzw. der umlaufenden Aussenfläche, wodurch sich die Klemmung hauptsächlich unter dem Steg abspielt. Dadurch wird die Verpressung der Membrane zur Erzielung der Dichtheit auf einen spezifischen und schmalen Bereich konzentriert, was wiederum wenig Axialkraft erfordert und aufgrund der geringen Fläche dennoch einen hohen Druck auf die Membrane bzw. den Dichtsteg einbringt. Und deshalb auch nur ein geringes Anzugsmoment des Gehäuses und somit eine einfache Montage wie auch Wartung ermöglicht.

Als vorteilhaft hat sich gezeigt, wenn der Steg eine horizontal verlaufende Fläche aufweist bzw. als Plateau ausgebildet ist.

Als bevorzugte Ausführungsform hat sich gezeigt, wenn der Steg in einen Spitz verläuft.

Als vorteilhaft hat sich gezeigt, wenn der Steg und der Dichtsteg konzentrisch zueinander angeordnet sind. Neben dem, dass der Dichtsteg und der Steg axial in einer Linie untereinander bzw. senkrecht zueinander angeordnet sind, sind der Dichtsteg und der Steg auch konzentrisch zueinander angeordnet um zu gewährleisten, dass der Steg senkrecht auf den Dichtsteg an der Membrane presst.

Es hat sich als vorteilhaft gezeigt, dass der Steg eine schräg verlaufende Fläche zur Zentrierung des Innengehäuses zum Gehäuseunterteil aufweist. Die schräg verlaufende Fläche schliesst vorzugsweise an den Aussendurchmesser des Stegs an. Durch die schräg verlaufende Fläche bzw. Fase und den radial anschliessenden Steg ist die Funktion der Abdichtung und der Zentrierung voneinander entkoppelt, wodurch beide Funktionen besser zuverlässig erfüllt werden.

Als bevorzugte Ausführungsform hat sich gezeigt, wenn an der Auflagefläche des Gehäuseunterteils eine umgehend verlaufende Nase angeordnet ist. Diese dient der Zentrierung der Membrane auf der Auflagefläche am Gehäuseunterteil. Es wird darauf geachtet, dass die Anpresskraft beinahe ausschliesslich auf den Steg und damit auf den Dichtsteg der Membrane wirkt, um wie zuvor erwähnt, die Fläche, auf welche die axiale Kraft wirkt, möglichst klein zu halten.

Als vorteilhaft hat sich gezeigt, wenn die Nase eine schräg verlaufende Ebene aufweist, wobei die schräge Ebene parallel zur schrägen Fläche des Stegs angeordnet ist und der Zentrierung dient. Dadurch zentriert sich das Innengehäuse am Gehäuseunterteil.

Vorzugsweise ist ein Wulst an der Membrane angeordnet und dient der Zentrierung der Membrane im Innengehäuse. Der Wulst ist vorzugsweise an der oberen dem Medium abgewandten Seite angeordnet. Der Wulst wird in der umlaufenden Ecke, welche sich zwischen der schrägen Fläche und der horizontal anschliessenden Aussenfläche gebildet, zentriert.

Die Membrane wird vorzugsweise aus einer Stützmembrane und einem Membranschild gebildet. Vorzugsweise liegt das Membranschild direkt auf der Unterseite der Stützmembrane an. Selbstverständlich kann die Membrane auch einteilig ausgebildet sein.

Als vorteilhaft hat sich gezeigt, wenn die Membrane kreisförmig ausgebildet ist bzw. eine kreisförmige Grundform aufweist. Dies ermöglicht eine gleichmässige Kraftverteilung.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
Fig. 1 eine Teilschnittansicht durch ein Membranventil,
Fig. 2 einen Ausschnitt einer Explosionsansicht des Klemmbereichs und
Fig. 3 einen Teilschnitt einer Explosionsansicht der Membrane.

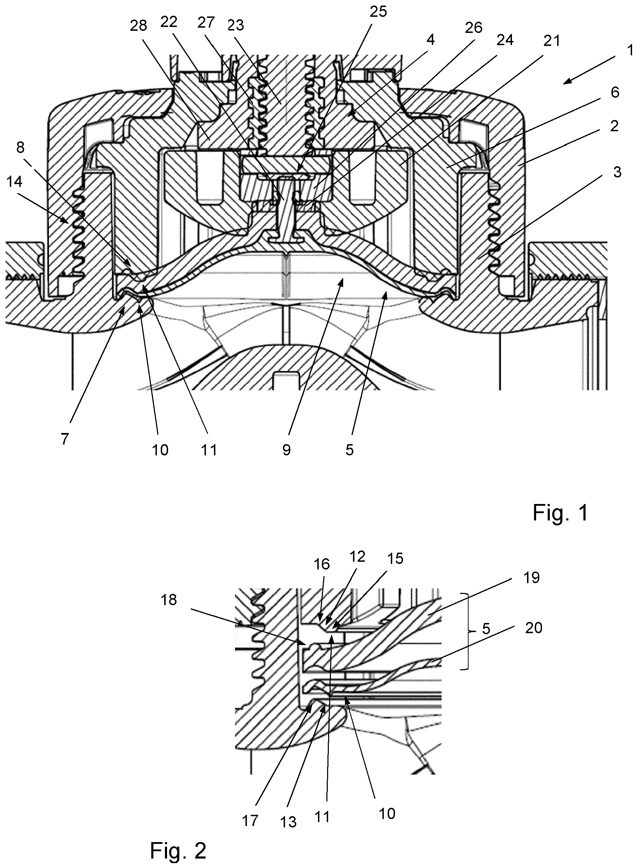

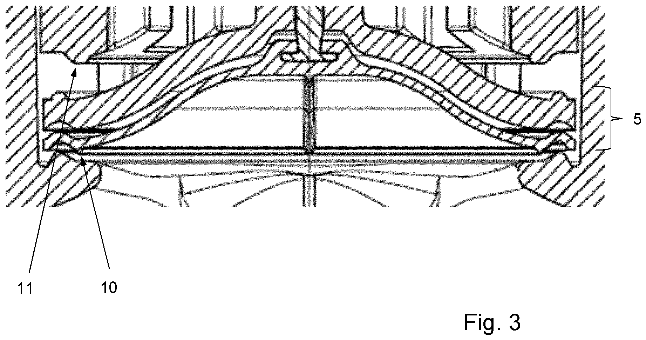

Die in Fig. 1 dargestellte Zeichnung zeigt ein erfindungsgemässes Membranventil 1 zur Regelung eines Durchflusses eines Mediums in einer Rohrleitung. Das Membranventil 1 weist ein Gehäuseoberteil 2 und ein Gehäuseunterteil 3 auf. Vorzugsweise sind die Gehäuseteile 2, 3 aus Kunststoff und weisen zum gegenseitigen Verschliessen ein Gewinde 14 auf. Zur Betätigung des Membranventils 1 weist das Membranventil 1 eine Betätigungseinheit auf. Vorzugsweise beinhaltet die Betätigungseinheit (4) ein Druckstück 21, mit dem die Membrane 5 über ein Verbindungselement 22 verbunden ist. Des Weiteren ist es vorteilhaft, wenn die Betätigungseinheit (4) eine Spindel (23) und einer Spindelmutter (28) mit einem umspritzten Gewindeeinsatz (27) beinhaltet. Die Spindel (23) ist vorzugsweise mittels Knebelkerbstift (25) mit dem Membranhalter (26) verbunden. Im Membranhalter (26) ist eine 6kt. Mutter (24) angeordnet. Vorzugsweise ist in dieser 6kt. Mutter (24) der Gewindestift / das Verbindungselement der Membrane (22) montiert. Beim pneumatisch angetriebenen Membranventil bewegt sich die Spindel vorzugsweise linear anstatt rotatorisch und ist direkt (formschlüssig) mit dem Membranhalter verbunden, dann wird keine Spindelmutter (28) und kein Knebelkerbstift benötigt. Das Druckstück (21) drückt die Membrane beim Schliessen auf das Gehäuseunterteil und beim Öffnen wird am Verbindungselement (22) gezogen. Die Spindel 23 der Betätigungseinheit (4) ist vorzugsweise mit einem Antrieb verbunden, wobei dieser manuell, elektrisch wie auch pneumatisch ausgebildet sein kann. Das erfindungsgemässe Membranventil 1 weist eine Membrane 5 auf, die den Durchfluss des Mediums regelt. Zudem unterteilt die Membrane 5 das Membranventil 1 in einen mediumsfreien und einen -durchströmten (9) Bereich. Das Membranventil 1 weist ein Innengehäuse 6 auf mittels dem die Membrane 5 im Gehäuse befestigt und positioniert wird. Die Membrane 5 liegt auf einem Auflagebereich 7 des Gehäuseunterteils 3 auf und wird durch einen Klemmbereich 8 des Innengehäuses 6 verpresst. Um eine geringe Axialkraft bei einer hoher Flächenpressung umsetzen zu können, weist die Membrane einen Dichtsteg 10 und das Innengehäuse 6 im Klemmbereich einen Steg 11 auf. Dadurch wird die Pressung der Membrane 5 beinahe ausschliesslich über die Fläche des Stegs 11 und des Dichtstegs 10 erreicht. Der Steg 11 und der Dichtsteg 10 sind dazu senkrecht übereinander angeordnet, was gut aus den Figuren 1 bis 3 zu erkennen ist. Es ist vorteilhaft, wenn der Steg 11 und der Dichtsteg 10 konzentrisch ausgebildet sind. Zudem weist die Membrane 5 vorzugsweise eine kreisförmige Grundform auf. Aus Fig. 2 und 3 ist gut ersichtlich, dass der Steg 11 eine schräg verlaufende Fläche 12 zur Zentrierung aufweist. Dadurch zentriert sich das Innengehäuse 6 am Gehäuseunterteil 3, welches ebenfalls eine schräg verlaufende Ebene 13 aufweist die mit der schrägen Fläche 12 parallel verläuft, wodurch eine optimale Positionierung umgesetzt wird. Es ist vorteilhaft, wenn es am Auflagebereich 7 eine Nase 17 aufweist. An dieser ist die schräge Ebene 13 angeordnet, wie die Nase 17 auch dem Zentrieren der Membrane 5 dient. Als vorteilhaft hat sich gezeigt, wenn an der Oberseite der Membrane 5 eine Wulst 18 angeordnet ist. Diese dient der Zentrierung der Membrane 5 gegenüber des Innengehäuses 6. Vorzugsweise zentriert sich die Wulst 18 an der umlaufenden Ecke 16 im Innengehäuse 6, welche zwischen der horizontal verlaufenden Aussenfläche 15 und der schrägen Fläche 12 gebildet wird. Die Membrane 5 setzt sich vorzugsweise aus einer Stützmembrane 19 und einem Membranschild 20 zusammen, wobei das Membranschild 20 vorzugsweise auf der Stützmembrane 19 anliegt. Selbstverständlich wenn auch nicht aus den Figuren ersichtlich kann die Membrane 5 auch als ein Teil ausgebildet sein und muss nicht aus einer Stützmembrane 19 und einem Membranschild 20 bestehen.

### Bezugszeichenliste

- 1: Membranventil
- 2: Gehäuseoberteil
- 3: Gehäuseunterteil
- 4: Betätigungseinheit
- 5: Membrane
- 6: Innengehäuse
- 7: Auflagebereich Gehäuseunterteil
- 8: Klemmbereich Innengehäuse
- 9: Unterseite Membrane
- 10: Dichtsteg
- 11: Steg
- 12: Schräge Fläche Innengehäuse
- 13: Schräge Ebene Gehäuseunterteil
- 14: Gewinde
- 15: Horizontal anschliessende Aussenfläche
- 16: Umlaufende Ecke
- 17: Nase
- 18: Wulst
- 19: Stützmembrane
- 20: Membranschild
- 21: Druckstück
- 22: Verbindungselement
- 23: Spindel
- 24: 6kt Mutter
- 25: Knebelkerbstift
- 26: Membranhalter
- 27: Gewindeeinsatz
- 28: Spindelmutter

## Patentansprüche

1. Membranventil (1) zur Regelung eines Durchflusses eines Mediums in einer Rohrleitung beinhaltend, ein Gehäuseoberteil (2), ein Gehäuseunterteil (3), eine Betätigungseinheit (4), eine Membrane (5) und ein membranpressendes Innengehäuse (6), wobei die Membrane an einem Auflagebereich (7) des Gehäuseunterteils (3) aufliegt und mit einem Klemmbereich (8) des Innengehäuses verpresst ist, **dadurch gekennzeichnet, dass** die Membrane (5) an der unteren dem Medium zugewandten Seite (9) einen Dichtsteg (10) und das Innengehäuse eine im Klemmbereich (8) verlaufenden Steg (11) aufweist, wobei der Steg (11) senkrecht über dem Dichtsteg (10) angeordnet ist.

2. Membranventil (1) nach Anspruch 1, **dadurch gekennzeichnet, dass** der Dichtsteg (10) und der Steg (11) kreisringförmig umlaufend ausgebildet sind.

3. Membranventil (1) nach einem der Ansprüche 1 oder 2, **dadurch gekennzeichnet, dass** der Steg (11) und der Dichtsteg (10) konzentrisch angeordnet sind.

4. Membranventil (1) nach einem der Ansprüche 1 bis 3, **dadurch gekennzeichnet, dass** der Steg (11) eine schräg verlaufende Fläche (12) zur Zentrierung des Innengehäuses (6) gegenüber dem Gehäuseunterteil (3) aufweist.

5. Membranventil (1) nach einem der Ansprüche 1 bis 4, **dadurch gekennzeichnet, dass** an der Auflagefläche (7) des Gehäuseunterteils (3) eine kreisringförmig umlaufende Nase (17) angeordnet ist.

6. Membranventil (1) nach Anspruch 5, **dadurch gekennzeichnet, dass** die Nase (17) eine schräge verlaufende Ebene (13) aufweist, wobei die schräge Ebene (13) parallel zur schrägen Fläche (12) des Stegs (11) angeordnet ist und der Zentrierung dient.

7. Membranventil (1) nach einem der Ansprüche 1 bis 6, **dadurch gekennzeichnet, dass** eine Wulst (18) an der Membrane (5) angeordnet ist und der Zentrierung der Membrane (5) im Innengehäuse (6) dient.

8. Membranventil (1) nach einem der Ansprüche 1 bis 7, **dadurch gekennzeichnet, dass** die Membrane (5) aus einem der Kunststoffe EPDM, FKM oder NBR hergestellt ist.

9. Membranventil (1) nach einem der Ansprüche 1 bis 8, **dadurch gekennzeichnet, dass** die Membrane (5) eine Stützmembrane (19) und ein Membranschild (20) aufweist.

10. Membranventil (1) nach einem der Ansprüche 1 bis 9, **dadurch gekennzeichnet, dass** der Dichtsteg (10) integral an der Unterseite der Membrane (5) angeordnet ist.

11. Membranventil (1) nach Anspruch 1 bis 10, **dadurch gekennzeichnet, dass** die Membrane (5) kreisförmig ausgebildet ist bzw. eine kreisförmige Grundform aufweist.

12. Membranventil (1) nach Anspruch 9, **dadurch gekennzeichnet, dass** das Membranschild (20) aus einem der Kunststoffe PTFE, PFA oder einem PE hergestellt ist.

13. Membranventil (1) nach Anspruch 9, **dadurch gekennzeichnet, dass** die Stützmembrane (19) aus einem der Kunststoffe EPDM oder FKM hergestellt ist.

14. Membranventil (1) nach Anspruch 1 bis 13, **dadurch gekennzeichnet, dass** der Steg (11) eine horizontal verlaufende Fläche aufweist bzw. als Plateau ausgebildet ist.
